Europäisches Patentamt

European Patent Office

Office européen des brevets

(19)

(11) Veröffentlichungsnummer: **0 112 495**
A2

(12) **EUROPÄISCHE PATENTANMELDUNG**

(21) Anmeldenummer: 83111630.6

(22) Anmeldetag: 22.11.83

(51) Int. Cl.³: **A 23 J 1/06**, A 23 J 1/00

(30) Priorität: 23.11.82 DE 3243205

(71) Anmelder: **Pruss, Günter, Tilsiter Strasse 2 L, D-2217 Kellinghusen/Holstein (DE)**

(43) Veröffentlichungstag der Anmeldung: 04.07.84 **Patentblatt 84/27**

(72) Erfinder: **Pruss, Günter, Tilsiter Strasse 2 L, D-2217 Kellinghusen/Holstein (DE)**

(84) Benannte Vertragsstaaten: **AT CH GB IT LI**

(74) Vertreter: **Struck, Willi, Dr.-Ing., Friedrich-Ebert-Strasse 10f, D-2080 Pinneberg (DE)**

(54) **Verfahren und Vorrichtung zur Herstellung von Eiweisskonzentrat insbes. aus Tierblut oder dergl.**

(57) Die Erfindung betrifft ein Verfahren und eine Vorrichtung zur Herstellung von Eiweißkonzentrat, insbesondere aus Tierblut und/oder anderen eiweißhaltigen Substanzen tierischen oder pflanzlichen Ursprungs und bezweckt die Schaffung einer wirtschaftlichen Verfahrenstechnik, um das insbesondere in Tierblut enthaltene Eiweiß in hohen Konzentrationen freizusetzen.

Erfindungsgemäß soll dazu reiner Sauerstoff oder der Sauerstoff der Luft in eine höhere Wertigkeit überführt und so in feinverteilter Form in eine wäßrige Lösung aus Tierblut und/oder anderen eiweißhaltigen Grundstoffen eingeleitet werden.

Durch die intensive Belüftung mit dem ozonhaltigen Sauerstoff höherer Wertigkeit scheidet sich aus der wäßrigen Lösung angereichertes im wesentlichen schaumiges Eiweißkonzentrat aus, welches dann gegebenenfalls einer weiteren Behandlung wie Eindampfung oder Trocknung zugeführt wird.

Trocknung

Die Erfindung betrifft ein Verfahren und eine Vorrichtung
zur Herstellung von Eiweßkonzentrat insbesondere aus Tieblut und anderen eiweißhaltigen Substanzen tierischen oder
pflanzlichen Ursprungs, wobei atmosphärische Luft und/oder
ein Sauerstoff-Stickstoffgemisch durch einen Ozonerzeuger
geleitet wird.

Die Nutzbarmachung eiweißhaltiger Rohstoffe findet ein
wachsendes Interesse in vielen europäischen Ländern. Beträchtliche Mengen Rohproteins gehen für die Humanernährung verloren, da Aufarbeitungsverfahren nicht die gewünschte oder
geforderten Resultate liefern. Die Blutmenge der Schweine beispielsweise, die 1978 in EG-Ländern, geschlachtet wurden,
entspricht eine Proteinmenge wie sie in 225 ooo Tonnen Fleisch
enthalten ist. Es gibt zahlreiche Verfahren die eine Aufarbeitung von Tierblut beschreiben, die teilweise auch Anwendung
finden, sie sind aber durchweg mit Nachteilen behaftet und
das aufgearbeitete Tierblut eignet sich kaum für Humanernährung. Bei den bekannten enzymatischen Verfahren fehlen wichtige Aminosäuren (Iso-Leucin) in ausreichenden Mengen. Bei
den sauren Verfahren entstehen Bitterpeptide und bei der
Oxydation mit Wasserstoffperoxyd werden Aminosäuren sogar
zerstört. Bei der Verwertung von Tierblut, bei der durch Trennung Plasma und rote Blutkörperchen separiert werden, haftet
den Endprodukten nicht nur ein typischer Tiergeruch an,.sodaß vom Geschmack her eine Weiterverarbeitung erschwert ist,
das Schwerblut zeichnet sich außerdem durch eine so intensive Färbung aus, daß es sich nur für die Tierfutterverarbeitung eignet. Die Gewinnung von Eiweiß aus anderen Rohstoffen ist bekannt, so auch aus Mineraloel, es werden für die Synthese Bakterien eingesetzt, es ist teurer Rohstoff und dient anderen Verwendungszwecken effektiver.

Die Erfindung hat sich die Aufgabe gestellt, die zuvorgenannten Nachteile bei der Gewinnung von Proteinen aus Tierblut und/oder Schwerblut und anderen eiweißhaltigen Grundstoffen abzustellen. Vorgeschlagen wird eine elegante und vor allem wirtschafliche wie natürliche Verfahrenstechnik, die das in den Rohstoffen, vorzugsweise Tierblut, enthaltene Eiweiß aufbaut, anreichert und in hohen Konzentrationen freisetzt.

Erfahrungsgemäß wird die gestellte Aufgabe dadurch gelöst, daß ein Verfahren Anwendung findet, das mit den verfahrenstechnischen Mitteln der Biotechnik aus eiweißhaltigen Grund- oder Rohstoffen, vorzugsweise Tierblut konzentriertes Eiweiß aufbaut, gleichzeitig reinigt und anreichert und eine Nachbehandlung überflüssig macht, so daß das erhaltene Eiweißkonzentrat sofort einem Trockenprozeß zugeführt wird.

Der Verfahrensablauf stellt sich in der Vorrichtung folgendermaßen dar:
Frisches Tier- oder Schweineblut, vorzugsweise Rinder- und Schweineblut, wird in einem V2A-Stahlreaktorturm gegebenenfalls mit Wasser verdünnt. Ein Sauggebläse führt atmosphärische Luft in einen Ozonerzeuger der nach dem Prinzip der stillen Entladung arbeitet. Die angesaugte atmosphärische
Luft, ein Sauerstoff-Stickstoffgemisch wird im Ozonerzeuger,
der mit einer Spannung von ca.12000 Volt arbeitet mit Ozon
angereichert. Ein ggf. vorgeschalteten Lufttrockner erhöht
die Ozonbildung. Das aus dem Ozonerzeuger austretende Gasgemisch höherer Wertigkeit wird direkt und fein verteilt in
Bodennähe des Stahlturmes eingeleitet und belüftet das Tierblut
oder einen anderen eiweißhaltigen Grundstoff intensiv. Es ist
zweckmäßig den Stahlturm zu verschließen, damit sich ein gewisser Druck aufbauen kann. Der in großen Mengen aufsteigende,
gereinigte und konzentrierte Eiweißschaum wird aus dem Reaktorturm über eine Rohrleitung in einen Auffangkessel geleitet
und später einem Trockenprozeß zugeführt. Das Sauerstoff-Stickstoffgemisch mit Ozonanteil, reinigt, desinfiziert und entfärbt das Tierblut. Das Produkt ist geschmacksneutral, von
heller Farbe und es ist kein Blutcharakter nachweisbar, die
Eiweißkonzentration in der Trockensubstanz beträgt ca. 95% und
mehr.

Mit dem zuvor beschriebenen Verfahren können eine sehr große
Anzahl von eiweißhaltigen Grundstoffen in der beschriebenen
Vorrichtung aufgearbeitet werden. Es ist auch die Möglichkeit
gegeben, eiweißhaltige Grundstoffe vor der Aufarbeitung mit
anderen Stoffen zu mischen beispielsweise mit Vitaminen. Zellsäfte von Pflanzen, Hefe und anderen Pilze lassen sich ebenso
problemlos aufarbeiten wie auch Oele und Wasserpflanzen.
Der Ozonanteil des atmosphärischen Sauerstoff-Stickstoffgemisches kann jederzeit dadurch erhöht werden, daß die angesaugte Luft vor der Strukturumwandlung im Ozonerzeuger durch
einen vorgeschalteten Luftrockner geleitet wird. Der Einsatz
von Flaschengas mit vorbereiteten Sauerstoff-Stickstoffgemischen ist möglich.

In einem Ausführungsbeispiel wird vorgeschlagen, gemischtes
Schwerblut von Rindern und Schweinen im Stahlreaktorturm mit
Wasser zu verdünnen. Durch ein am Boden des Behälters befindlichen Strahlrohrsystem wird das im Ozonerzeuger zuvor aufbereitete ozonangereicherte Sauerstoff-Stickstoffgasgemisch
eingeleitet und das Blut intensiv belüftet.

Die für die Aufbereitung benötigte atmosphärische Luft wird
dem Ozonerzeuger von einem Ansauggebläse zugeführt, ein
zwischengeschalteter Drucklufttrockner kann ggf. die Ansaugluft
bei Bedarf vortrocknen. Experimetell hat sich natürliche
atmosphärische Luft ohne Vortrocknung bei der Aufarbeitung von
Frischblut bewährt. Sofort nach einsetzender Belüftung des
Tierblutes mit dem ozonangereicherten Sauerstoff-Stickstoffgasgemisch, wird das Eiweiß entfärbt und als glasklarer Schaum
heftig und stetig nach oben drängend ausgeschieden. Vorzugsweise wird der Reaktorturm an seinem oberen Teil verschlossen,
so daß das aufsteigende ozonangereicherte Sauerstoff-Stickstoffgasgemisch nachhaltig wirken kann. Über eine Rohrleitung
wird der Eiweißschaum in einem Auffangbehälter übergeführt und
später einem Trockenvorgang unterworfen; bewährt hat sich
die Sprühtrocknung. Die anfallende Trockensubstanz bestehend
zu 95,2% aus Eiweiß.

Die Erfindung wird anhand der in den Zeichnungen dargestellten Ausführungsformen beispielsweise näher erläutert.

Es zeigen:

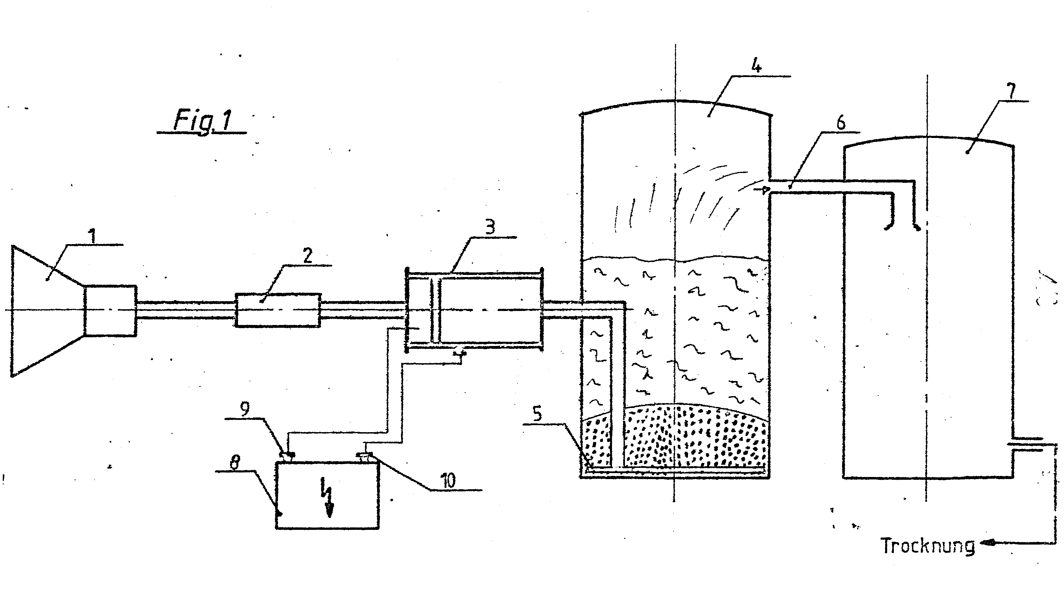

Fig. 1 eine schematische Darstellung der Anlage für die Aufarbeitung von eiweißhaltigen Grundstoffen und

Fig. 2 einen Schnitt durch den Ozonerzeuger.

Gemäß Fig . 1 zeigt die Darstellung vom Ansauggebläse (1) ausgehend den Weg der angesaugten Luft zum Drucklufttrockner (2) von dem aus die Trockenluft in den Ozonerzeuger (3) gelangt. Im Ozonerzeuger (3) wird die vorzugsweise getrocknete Luft bestehend aus dem natürlichen Sauerstoff-Stickstoffgasgemisch in ein ozonhaltiges Gasgemisch umgewandelt, wobei ein Teil Sauerstoff $O_2$ des Gasgemisches in Ozon $O_3$ verändert wird und so ein Sauerstoffanteil höherer Wertigkeit entsteht. Das mit Ozon angereicherte Sauerstoff-Stickstoffgasgemisch wird direkt in den Reaktorturm (4) geleitet, in dem sich der aufzuarbeitende eiweißhaltige Grundstoff, Schwerblut befindet. Das Gasgemisch wird durch ein am Boden des Reaktorturmes (4) angeordnetes Strahlrohrsystem (5) geführt und gelangt so feinverteilt in den Grundstoff der hierdurch intensiv belüftet wird. Sobald die Belüftung des aufgearbeiteten Grundstoffes in Gang gesetzt ist, entwickelt sich ein glasklarer Schaum der im Reaktorturm (4) in großen Mengen aufwärts drängt und als gereinigtes, konzentriertes Eiweiß durch eine Rohrleitung (6) in den Auffangkessel (7) gelangt. Der Hochspannungstrafo (8) mit seinen Polen (9) und (10) versorgt den Ozonerzeuger mit einer Spannung von ca. 12000 Volt.

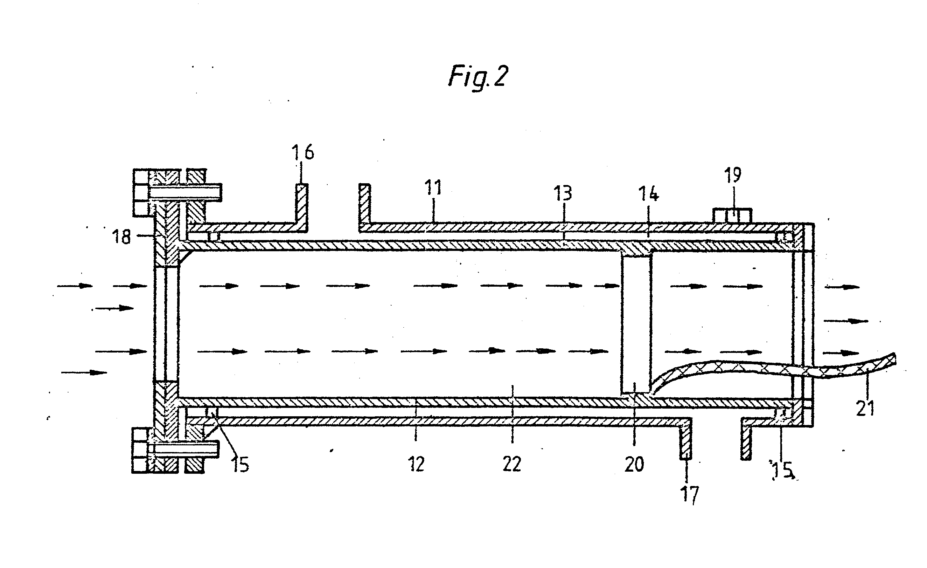

Gemäß Fig. 2 besteht der Ozonerzeuger aus dem äußeren Edelstahlgehäuse (11) als Kathode, dem Dieelektrium (12), mit einer aufgetragenen Metallschicht als Anode (13) und dem dazwischenliegenden Luftspalt (14) als Entladungsraum für die Strukturumwandlung des Sauerstoffs im Stickstoff. Der Entladungsraum (14) ist mittels zweier Teflondichtungen (15) an seiner vorderen und hinteren Stirnseite hermetisch verschlossen. An dem äußeren Edelstahlgehäuse der Kathode (11) befindet sich der Sauerstoffeingang (16) zum Entladungsraum (14) und der Austrittsstutzen für das Ozon (17), sowie der Montageflansch (18) und der Masse-anschluß (19). Der elektrische Anodenanschluß besteht aus einem Metallring (20), der achsial von kühlender atmosphärischer Luft durchströmt wird - sie ist lediglich durch kleine Pfeile angedeutet - kann aber für die Ozonerzeugung ebenfalls herangezogen werden.

PATENTANWALT

DR.-ING. WILLI STRUCK

PINNEBERG / HOLST.

FRIEDRICH-EBERT-STR. 10 f

Postanschrift: Patentanwalt Dr. W. Struck
2080 Pinneberg/Holst.   Postfach 2067

Verfahren und Vorrichtung zur Herstellung von
Eiweißkonzentrat insbes. aus Tierblut oder dergl.

---

Anm.: Günter Pruss, 2217 Kellinghusen/Holst.

## Patentansprüche

1. Verfahren zur Herstellung von Eiweißkonzentrat, insbes. aus
Tierblut und anderen eiweißhaltigen Substanzen tierischen
oder pflanzlichen Ursprungs oder dergl., dadurch gekennzeichnet, daß reiner Sauerstoff oder der Sauerstoff aus dem natürlichen Sauerstoff-Stickstoff-Gasgemisch  der gegebenenfalls vorgetrockneten atmosphärischen Luft in ozonhaltigen
Sauerstoff bzw. ein ozonhaltiges Sauerstoff-Stickstoff-
Gasgemisch höherer Wertigkeit überführt wird, daß dann der
ozonhaltige Sauerstoff bzw. das ozonhaltige Sauerstoff-
Stickstoff-Gasgemisch höherer Wertigkeit in die wässrige

- 2 -

Lösung des Tierblutes und/oder der anderen eiweißhaltigen Grundstoffe in der Weise eingeleitet wird, daß die wässrige Lösung einer intensiven Belüftung mit dem ozonhaltigen Sauerstoff bzw. mit dem ozonhaltigen Sauerstoff-Stickstoff-Gasgemisch höherer Wertigkeit unterworfen wird und daß schließlich das dabei aus der wässrigen Lösung ausgeschiedene angereicherte im wesentlichen schaumige Eiweißkonzentrat aus der Behandlung abgeführt und niedergeschlagen wird, woraufhin dann das Eiweißkonzentrat gegebenenfalls noch einem Eindampf- oder/und Trocknungsprozeß unterworfen wird.

2. Verfahren nach Anspruch 1, dadurch gekennzeichnet, daß der reine Sauerstoff bzw. das Sauerstoff-Stickstoff-Gasgemisch dem Verfahren aus Druckgasflaschen zugeführt wird.

3. Verfahren nach Anspruch 1 und 2, dadurch gekennzeichnet, daß der ozonhaltige Sauerstoff bzw. das ozonhaltige Sauerstoff-Stickstoff-Gasgemisch höhere Wertigkeit in feinverteilter Form in die wässrige Lösung des Tierblutes und/oder der anderen eiweißhaltigen Grundstoffe eingeführt wird.

4. Verfahren nach Anspruch 1 bis 3, dadurch gekennzeichnet, daß in die wässrige Lösung zusätzlich gereinigte atmosphärische Luft zur Verbesserung der Schaumbildung eingeleitet wird.

5. Verfahren nach Anspruch 1 bis 4, dadurch gekennzeichnet, daß dem angereicherten entfärbten noch flüssigen Eiweißkonzentrat vor dem Eindampf- oder/und Trocknungsprozeß Vitamine und/oder Geschmacksstoffe zugegeben werden.

6. Vorrichtung zur Durchführung des Verfahrens nach Anspruch 1 bis 5, gekennzeichnet durch einen Reaktorturm (4) zur Aufnahme der aus Tierblut und/oder dergl. bestehenden wässrigen Lösung der aufzuarbeitenden Substanz, ein am Boden des Reaktorturmes angeordnetes Strahlrohrsystem (5) für die Einführung von aus unter Überdruck stehenden Gasflaschen entnommenem Sauerstoff oder Sauerstoff-Stickstoff-Gasgemisch oder von mittels eines Ansaugegebläses (1) oder eines Verdichters aus der Atmosphäre entnommener Luft über einen Ozonerzeuger (3) in die wässrige Lösung der aufzuarbeitenden Substanz und einen über eine Leitung (6) mit dem Reaktorturm verb undenen Auffangkessel (7) für das Eiweißkonzentrat.

7. Vorrichtung nach Anspruch 6, dadurch gekennzeichnet, daß dem Auffangkessel (7) eine Eindickungs- oder/und Trocknungsvorrichtung für das Eiweißkonzentrat nachgeschaltet ist.

8. Vorrichtung nach Anspruch 6 und 7, dadurch gekennzeichnet, daß bei Verwendung von aus der Atmosphäre entnommener Luft zwischen das Ansauggebläse (1) bzw. den Verdichter und den Ozonerzeuger (3) eine Lufttrocknungsvorrichtung (2)

0112495

eingeschaltet ist.

9. Vorrichtung nach Anspruch 6 bis 8, dadurch gekennzeichnet, daß am Bodenteil des Reaktorturmes (4) ein weiteres Düsensystem zur Zuführung zusätzlicher, die Schaumbildung verbessernder atmosphärischer Luft angeordnet ist.

*Fig.1*

Trocknung

## Fig.2